# EUROPEAN PATENT APPLICATION

(11) **EP 2 101 272 A1**
(43) Date of publication of application: **16.09.2009**
(21) Application number: 09002926.5
(22) Date of filing: 02.03.2009
(51) Int. Cl.: G06F 17/30

(54) **Method of browsing web information using a mobile handheld device**

(30) Priority: 14.03.2008 TW 97109053
(71) Applicant: Mobile Action Technology Inc., Taipei Hsien (TW)
(72) Inventor: Wang, Hong-Yung, Sindian City Taipei Hsein (TW); Chen, Ming-Hua, Sindian City Taipei Hsein (TW)
(74) Representative: Brandenburger, Karin

(57) **Abstract**

A method of browsing web information using a mobile handheld device (40) is disclosed. Capture rules (26) are pre-established in a web page capture server (20). When a mobile handheld device (40) is linked to the web page capture server (20), the mobile handheld device (40) is allowed to assign one of the capture rules (26). The web page capture server (20) looks up a target web page on the Internet according to the specified capture rule (26). Target information is extracted from the target web page and directly displayed on the mobile handheld device.

## Description

### 1. Field of the Invention

The invention relates to a method of browsing web information using a mobile handheld device and, in particular, to a method that can customize a web page so that it can be displayed in the limited display area of a mobile handheld device.

### 2. Description of Related Art

In view of the popularity of the Internet, connecting personal computers, Laptop computers, and personal digital assistants (PDA's) to the Internet has become a necessary function. Through the Internet, people can browse various kinds of web pages to obtain desired information. However, currently the information provided on the Internet and the web page formats are designed for the environment of personal computers. Therefore, the design and technique only take into account the hardware of personal computers. In this case, it is usually assumed that the user has a desktop computer with a high-resolution monitor (better than 800x600 pixels), a powerful processor (CPU clock faster than 1 GHz), and a sufficient network bandwidth (ADSL/fiber connection). So the user can use a web browser to read web pages on such a monitor.

Mobile handheld devices such as mobile phones, PDA's have become more popular and versatile in functions. One feature is that the user can use the mobile handheld device to connect to the Internet. Due to their portability, the screen size, resolution, power durability, memory size, processor speed, network connection speed, and even the networking charge, the mobile handheld devices have a very different working environment from personal computers. Thus, it is often not smooth to browse web pages on such devices as mobile phones and PDA's. Common problems for the users of mobile handheld devices include slow browsing speeds and continuous scrolling of web page on the small screens. Sometimes, the language (ActiveX/ Java Applet/ JavaScript) used to compose the web page makes it impossible to be properly displayed on a handheld device.

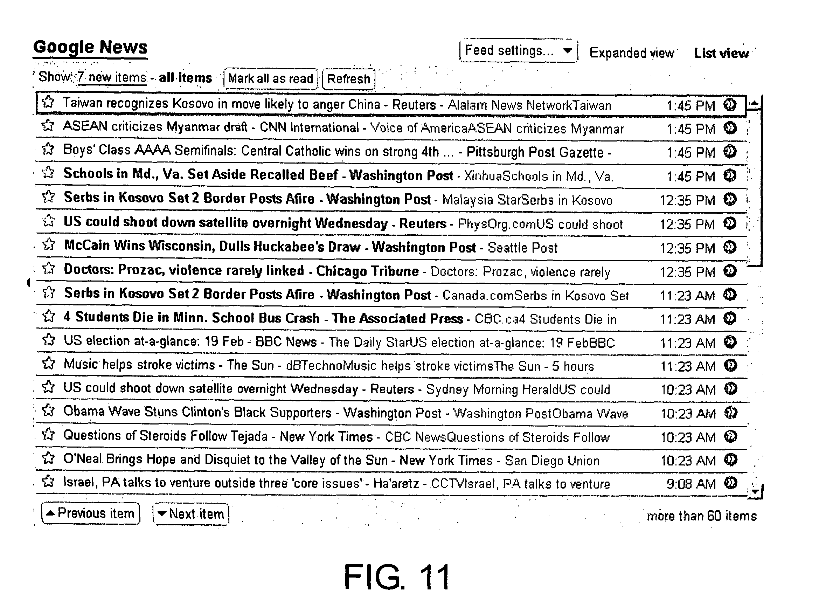

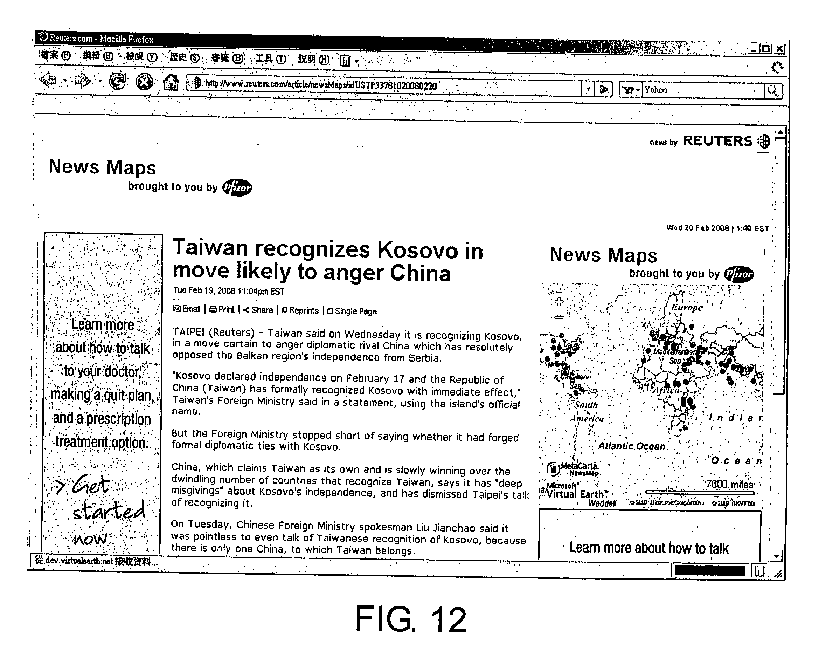

For the convenience of mobile handheld devices with network functions, web page suppliers also provide some solutions. For example, the really simple syndication (RSS) technique uses a simplified document-encoding format to reduce data transmission flux and required operating power of the browser. However, such solutions often need to re-adjust the web page format particularly for mobile handheld devices. This cannot effectively solve the browsing problem for mobile handheld devices for most web page contents. Take RSS as an example. As shown in FIG. 11, the technique can only provide the title link of a web page and its abstract. When the user wants to further read the detailed content, he/she has to click a hyperlink. As shown in FIG. 12, the handheld communication is still linked to the original complicated web page designed for the usual personal computers. Most web page content providers do not take into account the mobile handheld device browsing at all. Therefore, the web pages do not provide the RSS service and are thus totally unsuitable for mobile handheld devices.

In addition to an operating system (OS) such as Microsoft Windows or Apple MAC, a personal computer is usually installed with a web browser as well. The web browser is an application program. Common web browsers include Internet Explorer, Firefox, etc. The web browser is mainly used to decode web page information transmitted from a remote web site and present it in a human readable format, such as text, pictures, videos, and music. Before the decoding, the web page data received by the personal computer is a binary data stream composed using the digital coding technology. Besides sending information from a remote web site to the user's personal computer, many applications also require users to send data to the remote web site in order to establish interactions. This happens in inquiries, filtering, and verification of users.

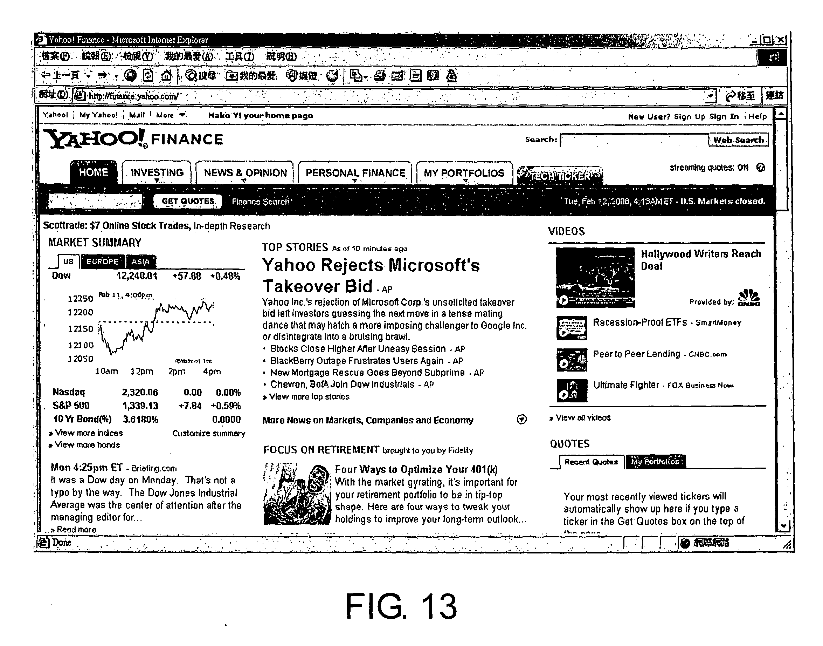

To pack the above-mentioned web page text, pictures, videos, and music as well as to provide interactions, the industry has set a standard communication protocol, namely the HyperText Markup Language (HTML). The HTML is a markup language for web pages. With reference to FIG. 13, through HTML encoding, a web site can first pack all the text, picture, video, music information, and even JavaScript codes together and then transmit it to the browser on the user's computer. The browser unpacks the received data and presents the original contents to the user.

Since the HTML support versatile designs, it is thus fairly easy to embed all the text, picture, video and music data in different formats into one web page. Consequently, for most web pages the data transmitted from one web address often contains a huge amount of multimedia data and embedded JavaScript. This is not a problem for the browser on a personal computer. Moreover, the web page designer usually has optimized the web page for the environment of personal computers. Therefore, the user can enjoy the abundant information of text, tables, voices, videos, interactive JavaScript, or even additional objects for Flash Player. The user is thus attracted to browse through other contents in the web site.

Currently, some Internet service providers (ISP) enable the proxy gateway to utilize a translator. Through a translating process, the translator filters out the syntax that cannot be browsed by a normal mobile handheld device from a web page composed of complicated elements designed for personal computer browsing. This design to some extent solves the problem of mobile handheld devices in browsing some web pages. However, this merely solves the compatibility problem in hardware and software browsing. After translation and deletion, the leftover information is usually not sufficient. The user cannot obtain the contents of interest. In fact, when the user wants to browse a particular web page, he or she wants to obtain contents meaningful to him or her. If the display result does not meet the need, such techniques are not useful at all.

To overcome the shortcomings, the present invention provides a method of browsing web information using a mobile handheld device to mitigate or obviate the aforementioned problems.

The invention provides a method of browsing web information on a mobile handheld device. By pre-specifying target information on a web page, the mobile handheld device is enabled to directly display the information required by the user. Unnecessary advertisements and other uninteresting contents are screened.

To achieve the objective, the disclosed method includes the steps of:
establishing in advance a capture rule in a web page capture server, the capture rule including a web address of at least one target web page and target information to be captured;
the web page capture server receiving a connection request sent from a mobile handheld device, the connection request including a command of specifying a capture rule;
the web page capture server based on the connection request looking up the target web page on the Internet and capturing, filtering, and rearranging the contents in the target web page following the specified capture rule; and
the web page capture server returning the captured and filtered target information to the mobile handheld device.

The capture rules can define the web address of the original target web page, the objects to be extracted, filtering rules, converting rules, and rules for recoding.

Through the above-mentioned steps, a user can customize the web page contents of interest on a mobile handheld device. The user does not need to pre-install any program in his/her personal computer or mobile handheld device. Using the function of 'capture from web pages' of the web page capture server, the user can customize personal capture rules for web pages. Each time he or she connects to the network and browses web pages, real-time information on the target web page is obtained.

Other objectives, advantages and novel features of the invention will become more apparent from the following detailed description when taken in conjunction with the accompanying drawings.

### In the drawings:

FIG. 1 is a system block diagram for implementing a method of browsing web information using a mobile handheld device in accordance with the present invention;
FIG. 2 is a flowchart of the method in accordance with the present invention;
FIG. 3 shows a login page for connecting to a web page capture server according to the invention;
FIG. 4 shows an operating web page for activating web page capture function on the disclosed web page capture server;
FIGS. 5A and 5B are operating pages for locking target information on a web page according to the invention;
FIG. 6 is a schematic view of establishing a plurality of capture rules on a web page capture server according to the invention;
FIG. 7 shows an operating page for a mobile handheld device to connect to a web page capture server;
FIG. 8 shows an operating page for specifying a customized capture rule after the mobile handheld device is connected to a web page capture server;
FIG. 9 shows an operating page for specifying a pre-set capture rule after the mobile handheld device is connected to the web page capture server;
FIG. 10 is a schematic view of desired information obtained using a capture rule according to the invention;
FIG. 11 shows a web page that uses the RSS technology to provide title links and their abstracts in accordance with prior art;
FIG. 12 shows a text web page when the user clicks a title link in FIG. 11; and
FIG. 13 is a web page having text, pictures, and video multimedia features in accordance with prior art.

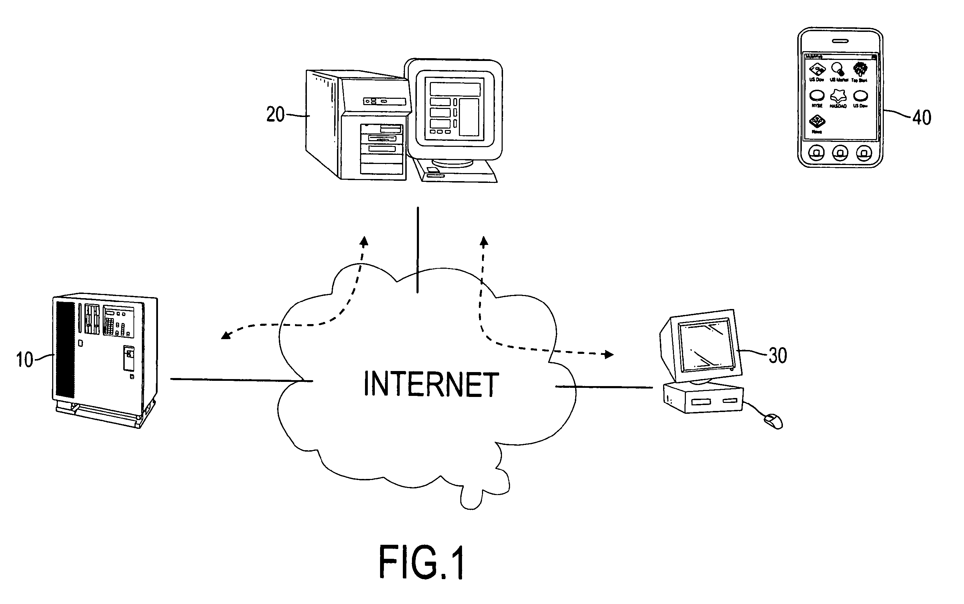

With reference to Fig. 1, a system for implementing the method of browsing web information using a mobile handheld device includes a web server 10, a web page capture server 20, a user host 30, and a mobile handheld device 40.

The web server 10 is a usual server currently already existing on the Internet. The server 10 provides some web pages for users to browse. The contents of the web pages may include multimedia objects such as text, videos, pictures, and music. The techniques for editing the web pages include, but not limited to, the following ones: WAP, HTML, CSS, JavaScript, PHP, JSP, XHTML, XML, DHTML, JASP, ASP, PERL, and Flash.

The web page capture server 20 allows a user to register and verifies the login user's identity. The web page capture server 20 can connect to the web page server 10.

The user host 30 is linked to the web page capture server 20 through the Internet in order to establish and edit a plurality of different, customized capture rules thereon. Each of the capture rules may define an original target web page, objects to be captured, filtering rules, converting rules, and recoding rules. The user host 30 selects the contents of interest from a corresponding target web page in the web page server 10 instead of all the contents therein. The user host 30 can be a usual personal computer.

The mobile handheld device (MHD) 40 is a communication device with a display screen, an user interface and networking function, such as a mobile phone or PDA. The user interface may include, but not limited to, a keyboard, a touch-control screen, and buttons. The networking function includes, but not limited to, dialup, WAN, GPRS, and 3G. The mobile handheld device 40 links to the web page capture server 20, connects to the web page server 10 using the pre-established capture rule, and allows the user to browse the target information.

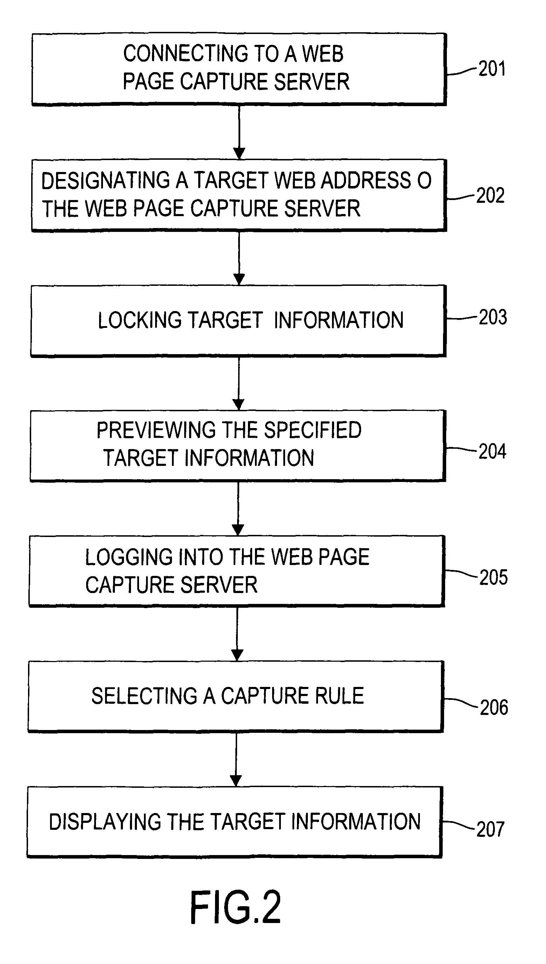

With further reference to FIG. 2, the method of browsing web information using a mobile handheld device involves two stages. The first stage is to establish capture rules. The second stage is to use the MHD 40 to browse web page information. The stage of establishing capture rules includes the following steps.

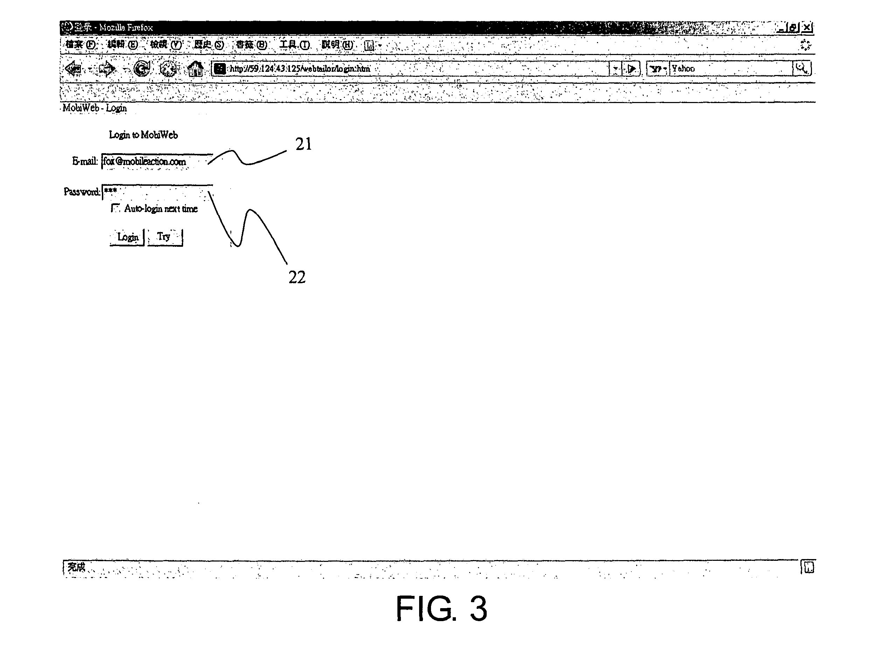

In step 201, a connection to the web page capture server is established. As shown in FIG 3, a user uses the user host 30 to connect to the web page capture server 20 via the Internet. The user then uses a registered personal account 21 and password 22 to login to the web page capture server 20. If the same user has logged into the system before, he or she may directly enter the page using cookie records.

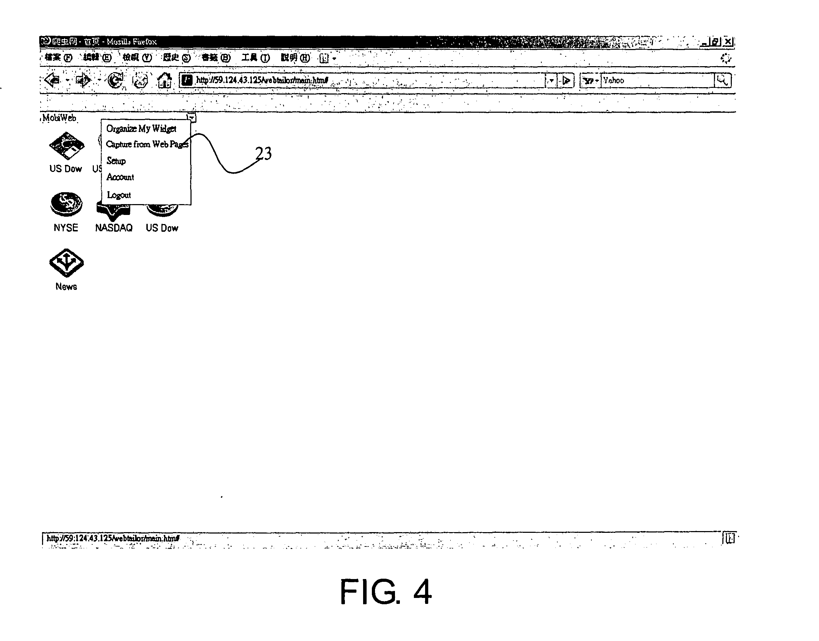

In step 202, a target web address is assigned to the web page capture server, as shown in FIG. 4. After the user successfully log into the web page capture server 20, he or she can execute a function of capture from web pages 23 provided by the web page capture server 20. Using this function and after entering the web address of the target web site, the web page capture server 20 first retrieves all the information on the corresponding web page and returns to the user host 30. The components objects in the web page are presented in a graphics user interface (GUI) to the user.

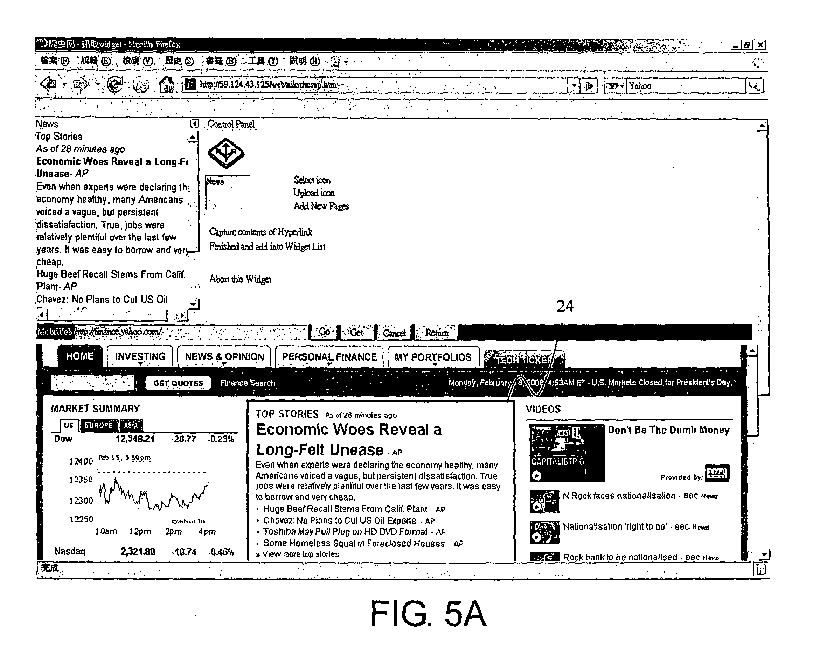

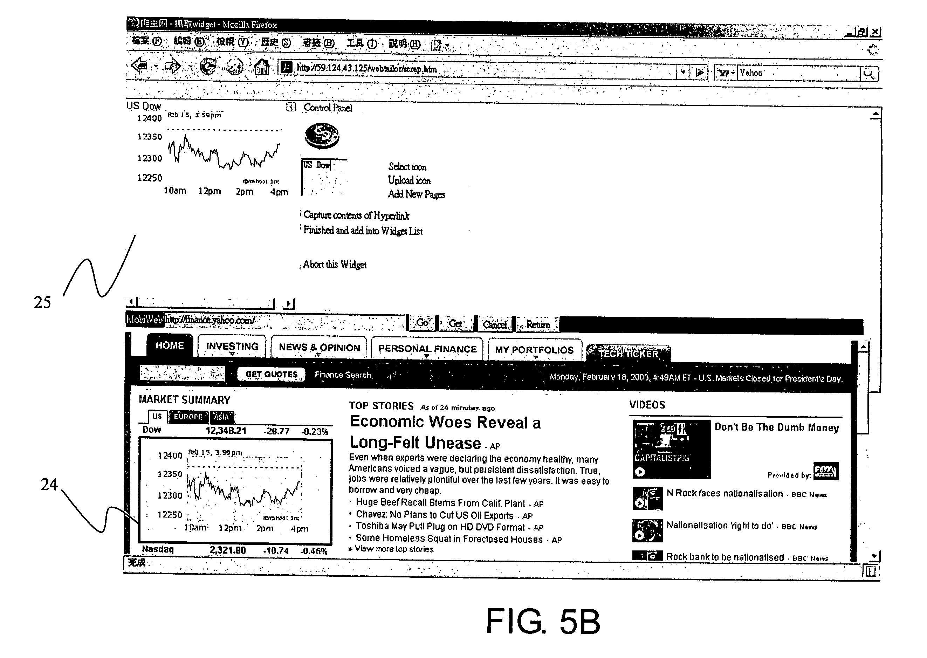

In step 203, target information is locked. Suppose the target web address specified by the user is http://finance.yahoo.com/. After receiving the request, the web page capture server 20 automatically connects to the corresponding web page and retrieves all the objects on the web page for analyses. The analyzed results are returned back to the user host 30 for display. During this process, the web page capture server 20 automatically pre-analyzes the component objects in the entire target web page and associates each object with a number. With reference to FIGS. 5A and 5B, when the user moves the mouse to any of selectable objects, a selection frame 24 is automatically displayed. The selection frame 24 can be a thick red solid line enclosed around the selectable object. For example, when the mouse is moved to a curve graphics object in the lower portion of FIG. 5A, a selection frame 24 automatically emerges from the curve graphics object, showing that the object is selectable. Likewise, when the mouse cursor is moved another obj ect, such as a news block, in the lower portion of FIG. 5B, a selection frame 24 automatically show up from it. After selecting an object, the user host 30 sends out a command to the web page capture server20 and locks the selected object as the target information. This selected object is the target information to be viewed from the mobile handheld device 40 later on.

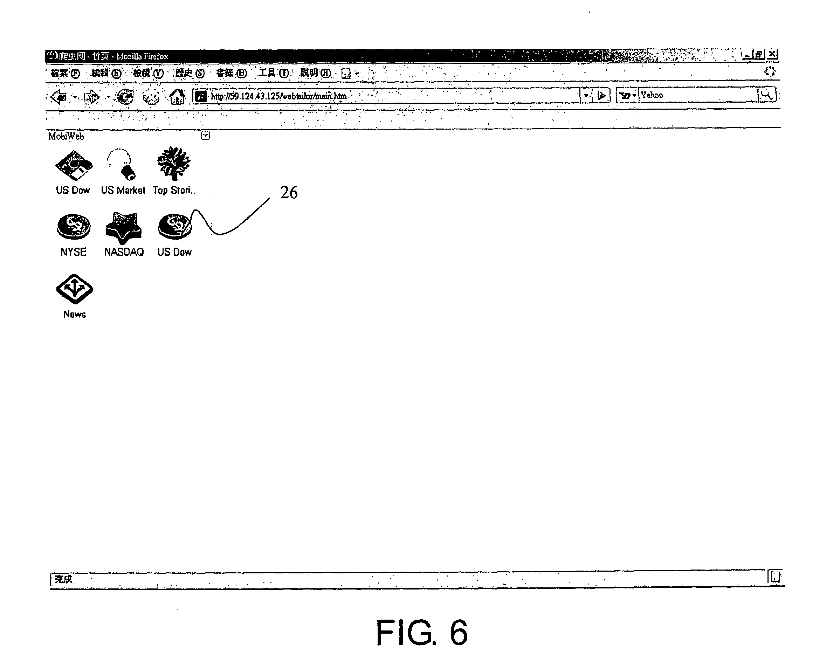

In step 204, the selected target information is previewed, as shown in the upper left corner of FIG. 5B. After selecting an object, a preview area 25 can be displayed on this page for the user to confirm. Once the previewed contents are confirmed, the user can give a name for the foregoing setting process, using which a capture rule 26 can be defined for the target information in the target web address. As shown in FIG. 6, several capture rules 26 are established on the web page capture server 20. Each capture rule 26 can be arbitrarily assigned to a graphic icon.

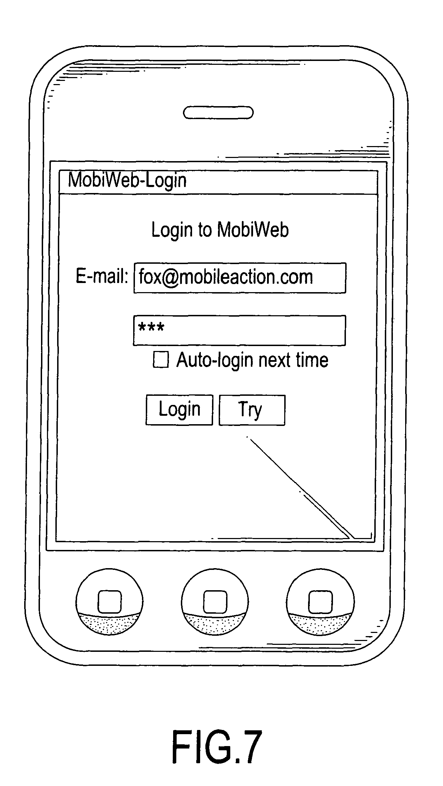

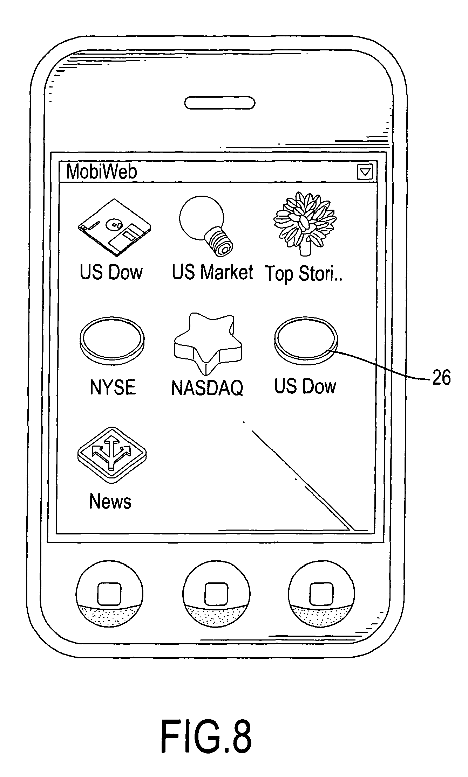

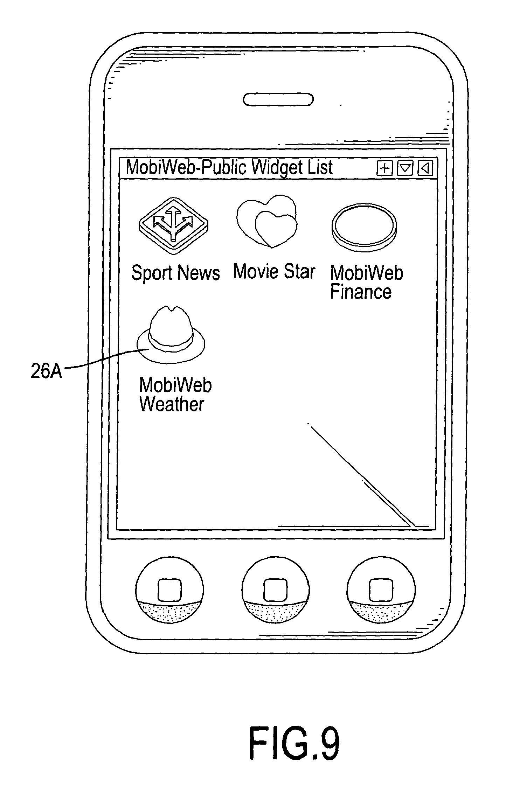

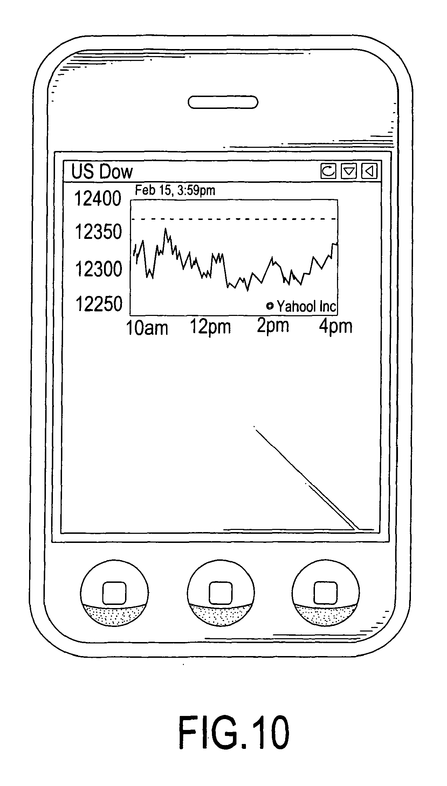

After establishing the capture rules 26, the user is then able to use a mobile handheld device 40 to view web page information. The second stage includes the following steps:
In step 205, the user logs into the web page capture server 205, as illustrated in FIG 7. A mobile handheld device 40 sends out a connection request, which is a request in accord with the HTTP or HTTPS communication protocol, in order to connect to the web page capture server 20. In a login page, the user enters correct personal account 21 and password 22, or logs into the system using cookies saved previously.
In step 206, a capture rule 206 is selected. With reference to FIG. 8, once the web page capture server 20 verifies a successful login of the mobile handheld device 40, the user enters a personal operating environment in the web page capture server 20. The customized capture rules 26 established in the previous stage can be displayed in this operating environment. The user can select a capture rule 26 through the mobile handheld device 40. With reference to FIG. 9, in addition to the capture rules 26 pre-established by the user, the web page capture server 20 can provide some common capture rules 26A specifically designed for information such as weather, traffic, news, and stock market. In other words, the common capture rules 26A can provide more convenient and faster shortcuts for the user to select.
In step 207, the target information is displayed, as shown in FIG. 10. Using either a customized capture rule 26 established by the user or a common capture rule 26A, the web page capture server 20 follows the web address in the capture rule 26, 26A to connect to the web page server 10 once it is specified. The user's mobile handheld device 40 thus only displays the locked target information. In this embodiment, a curve graphic object is used as an example. Therefore, unnecessary information in the same web page can be filtered out, ensuring that the objects displayed on the small screen of the mobile handheld device 40 are indeed of interest to the user.

The above-mentioned steps explain the flowchart of an embodiment of the invention. In practice, the step of locking target information (step 203) can be implemented as follows. Suppose the script language used in the target web page is HTML. The web page capture server 20 captures a web page and uses an HTML syntax analyzer to extract all the objects embedded in the original web page. After this step, all the component objects are obtained and numbered subsequently. According to the properties and selectabilities of the objects, the web page is rearranged in a way similar to the original one, generating a new page written in terms of JavaScript. The objects found in the above step are then added into the new page, as shown in FIGS. 5A and 5B. During this process, each selectable object is associated with a screen coordinate range. When the mouse is moved within the range, its selection frame 24 emerges. At the same time, a program is produced to record the object's number and return it to the web page capture server 20 when the user clicks on it.

When the user clicks an object, the object's number is returned to the web page capture server 20. Since the object number is associated with the original web page login process, web page operating procedure, web page information, requested objects, etc in the previously established object list, the web page capture server 20 can follow all the relevant information to build a procedure necessary for accessing the objects and the steps of subsequent filtering and object captures. In the end, the entire process can be saved in a user named capture rule, so that it can be directly used at the next time for obtaining updated information. The above description only elucidates one embodiment among many possibilities. In practice, there are other equivalent programs to achieve the same effects.

The invention utilizes many pre-designed or user customized capture rules and a web page capture server to filter web page information. The user can thus use a mobile handheld device, such as a mobile phone or PDA, to browse desired information on its screen. In comparison with the existing methods, the invention has the following advantages:
1. Using the disclosed customization method, the user does not need to pre-install any program in his/her personal computer or mobile handheld device. With the capturing function of the web page capture server, the user can customize personalized capture rules for web pages. This can avoid the compatibility problem caused by using different software and hardware. As far as the users are concerned, the operational complexity is minimized.
2. In accord with the disclosed personal web page customization method, each user can conveniently define capture rules without writing any program. Web page contents translation become automatic and simpler.
3. During the process for the user to customize personalized web pages, the web page capture server first analyze and number objects in an original target web page. Once the user defines a capture rule, the selected object is recorded by its corresponding identification or code. Subsequently, to display the target information using a handheld device, the web page capture server follows the object's identification to capture the latest information. Therefore, the capture rule is unlike the prior art that only deletes and re-format the original target web page. Instead, the component objects of the entire web page are analyzed, filtered, extracted, and rearranged. This novel method enables users to obtain latest information from web pages that contain news and real-time quotes.
4. The user can effectively use the networking time of a mobile handheld device. The user can first use a personal computer to edit and establish the connection information satisfying his/her needs. When the user uses a mobile handheld device to go online, he or she immediately enters the desired place for target information. This saves the user from going through layers of web pages, scrolling the web page screen, and digging links. Not only can the invention reduce unnecessary operating time, it largely reduces the networking time and cost of the user.
5. Since different mobile handheld devices vary in their display specifications, operating power, input methods, and connection speeds, it is extremely difficult for their users to browse Internet web pages that are originally designed for personal computers. Through the disclosed method of customizing web pages, the web page readability is greatly improved. The final result can satisfy different handheld communications for different users to obtain desired information.

While the invention has been described by way of example and in terms of the preferred embodiment, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A method of browsing web information using a mobile handheld device (40), comprising the acts of:
establishing in advance a capture rule in a web page capture server (20), the capture rule including a web address of at least one target web page and target information to be captured;
the web page capture server (20) receiving a connection request sent from a mobile handheld device (40), the connection request including a command of specifying a capture rule;
the web page capture server (20) based on the connection request looking up the target web page on the Internet and capturing, filtering, and rearranging the contents in the target web page following the specified capture rule; and
the web page capture server (20) returning the captured and filtered target information to the mobile handheld device (40).

2. The method as claimed in claim 1, wherein the capture rule established in the web page capture server (20) is a customized capture rule established by a user.

3. The method as claimed in claim 1, wherein the capture rule established in the web page capture server (20) is a common capture rule established by the web page capture server (20).

4. The method as claimed in claim 2, wherein the step of establishing a customized capture rule further includes the acts of:
using a user host (30) to connect to the web page capture server (20) via Internet;
the user host (30) specifying one target web address to the web page capture server (20) for asking the web page capture server (20) to capture all information in a web page corresponding to the target web address and return the captured information to the user host (30); and
locking some contents in the captured information as the target information according to a command sent from the user host (30) to the web page capture server (20).

5. The method as claimed in claim 4, wherein the step of establishing a customized capture rule further includes the step of previewing the target information on the user host (30), achieved by a preview function provided by the web page capture server (20).

6. The method as claimed in claim 4, wherein in the step of locking target information the web page capture server analyzes all information in the web page and provides a function of popping a frame for the user host (30) to lock target information by selecting the frame.

7. The method as claimed in claim 4, wherein the user host (30) sends a personal account (21) and a corresponding password (22) for logging into the web page capture server (20).

8. The method as claimed in claim 1, wherein the mobile handheld device (40) has a display screen, an operating interface, and a networking ability.

9. The method as claimed in claim 1, wherein the connection request sent by the mobile handheld device (40) is a request in accordance with the HTTP or HTTPS protocol.

10. The method as claimed in claim 1, wherein the techniques for establishing the target web page include WAP, HTML, CSS, JavaScript, PHP, JSP, XHTML, XML, DHTML, JASP, ASP, PERL, and Flash.

11. The method as claimed in claim 1, wherein each of the capture rules further includes a filter rule, a conversion rule, and a re-coding rule.
